# EUROPÄISCHE PATENTSCHRIFT

(11) **EP 4 196 708 B1**
(45) Veröffentlichungstag und Bekanntmachung des Hinweises auf die Patenterteilung: **14.08.2024**
(21) Anmeldenummer: 21725393.9
(22) Anmeldetag: 21.04.2021
(51) Int. Cl.: F16K 7/06, F16K 27/02, F16K 27/12, E05C 19/00

(54) **QUETSCHVENTIL**
PINCH VALVE
VANNE À ÉTRANGLEMENT

(30) Priorität: 13.08.2020 DE 102020121356
(43) Veröffentlichungstag der Anmeldung: 21.06.2023
(73) Patentinhaber: Sartorius Stedim Systems GmbH, 34302 Guxhagen (DE)
(72) Erfinder: DITTMANN, Simon, 37081 Göttingen (DE); SCHUBERT, Jan-Eike, 37077 Göttingen (DE); GOHS, Michael, 37081 Göttingen (DE); WEITEMEIER, Swen, 37139 Lödingsen (DE); BÖTTCHER, Lars, 34212 Melsungen (DE)
(74) Vertreter: Novagraaf International SA
(86) Internationale Anmeldenummer: PCT/EP2021/060391
(87) Internationale Veröffentlichungsnummer: WO 2022/033731

(56) Entgegenhaltungen:
- EP-A1- 0 429 813
- EP-A1- 0 634 595
- CN-A- 108 050 268
- DE-B- 1 167 137
- DE-B3- 102011 055 850
- US-B1- 6 289 912

## Beschreibung

### Gebiet der Erfindung

Die Erfindung betrifft ein Quetschventil, umfassend
- eine Schlauchführung, die entlang einer Schlauchführungsachse ausgerichtet ist,
- ein Klemmglied mit
   - einem Stößel, der entlang einer senkrecht zur Schlauchführungsachse ausgerichteten Stößelführungsachse verschieblich gelagert ist, und
   - zwei gemeinsam ein Klemmmaul bildenden Klemmbacken, die am vorderen, der Schlauchführung zugewandten Ende des Stößels angelenkt und einander entgegengesetzt jeweils um eine parallel zur Schlauchführungsachse ausgerichtete Schwenkachse verschwenkbar sind, sowie
- ein Widerlager, das auf der dem Klemmglied gegenüber liegenden Seite der Schlauchführung angeordnet ist,

wobei das Klemmglied zum Schließen des Quetschventils auf das Widerlager zu vorschiebbar ist, sodass sich beim Vorschub des Klemmgliedes das Klemmmaul öffnet und der Maulgrund des Klemmmauls einen in der Schlauchführung geführten Schlauch - sofern vorhanden - gegen das Widerlager presst und dabei das Lumen des Schlauchs verengt,
und die Klemmbacken mit einer mechanischen Zwangsführung derart gekoppelt sind, dass ein von einer maximal vorgeschobenen Klemmstellung des Klemmgliedes ausgehender Rückzug des Stößels zu einer Schwenkbewegung der Klemmbacken in Schließrichtung des Klemmmaules führt.

### Stand der Technik

Ein derartiges Quetschventil ist bekannt aus der DE 10 2011 055 850 B3.

Quetschventile sind in vielen Varianten bekannt. Ein Grundtyp eines Quetschventils ist beispielsweise in der DE 199 17 622 C2 offenbart. Derartige Quetschventile weisen eine Schlauchführung auf, in die ein medientransportierender, flexibler Schlauch einlegbar ist. Die Schlauchführung dient der mehr oder wenigen exakten Positionierung des Schlauchs zwischen einem Klemmglied und einem Widerlager. Die Axialrichtung der Schlauchführung, d.h. die Axialrichtung des Schlauchs im montierten Zustand, gibt die hier als Schlauchführungsachse bezeichnete Geometrieachse vor. Wesentliches Element eines Quetschventils ist das Klemmglied, das senkrecht zur Schlauchführungsachse auf das Widerlager zu verschiebbar ist. Die Axial- bzw. Bewegungsrichtung des Klemmgliedes, insbesondere seines Stößels, gibt die hier als Stößelführungsachse bezeichnete Geometrieachse vor. Ein Vorschub des Klemmgliedes, d. h. seine Bewegung auf das Widerlager zu, führt zu einer Verengung des freien Lumens der Schlauchführung, mithin zu einer Quetschung eines in die Schlauchführung eingelegten, elastisch flexiblen Schlauchs. Hierdurch verengt sich das freie Lumen des Schlauchs bis zum vollständigen Verschluss, so dass ein Medienstrom im Schlauch reduziert bzw. vollständig unterbunden wird. Die zum Vorschub des Klemmgliedes notwendige Kraft kann manuell oder automatisiert, beispielsweise elektromotorisch oder elektromagnetisch, pneumatisch oder hydraulisch generiert werden.

Die eingangs genannte, gattungsbildende Druckschrift offenbart eine besondere Form von Quetschventilen, mit der das Problem adressiert wird, dass sich das Lumen des Schlauchs beim Rückzug des Klemmgliedes, d. h. bei dessen Bewegung vom Widerlager weg, ggf. nicht oder nicht vollständig öffnet, weil die aufeinander gequetschten Innenflächenbereiche des Schlauchs aneinander haften und die Eigenelastizität des Schlauchmaterials nicht ausreicht, um den Schlauch vollständig in seine ursprüngliche Form rückzuüberführen. Zur Lösung dieses Problems schlägt die genannte Druckschrift vor, die Klemmbacken des Klemmgliedes klauenartig auszubilden und einander entgegengesetzt schwenkbar am Stößel des Klemmgliedes anzulenken, sodass sie gemeinsam ein öffen- und schließbares Klemmmaul bilden. Beim Schließen des Ventils, d. h. beim Vorschub des Klemmgliedes, soll sich das Klemmmaul öffnen, sodass die das Lumen des Schlauchs verschließende Quetschung mittels des Maulgrundes des Klemmmauls erfolgt. Beim Öffnen des Ventils, d. h. beim Rückzug des Klemmgliedes, soll sich das Klemmmaul teilweise schließen, wobei die Klauenenden eine nach radial innen gerichtete Kraft auf die Falzkanten des gequetschten Schlauchs ausüben. Diese Kraft wird durch die Materialsteifigkeit des Schlauchs in eine seine aneinander anliegenden Innenflächenbereiche auseinander treibende Kraft umgelenkt, die die Eigenelastizität des Schlauchs bei der Wiederherstellung von dessen Ursprungsform unterstützt. Um diese mit der Verschiebung des Klemmgliedes synchronisierte Maulbewegung bzw. Klemmbackenverschwenkung zu bewirken, schlägt die genannte Druckschrift u. a. vor, jede Klemmbacke mittels eines an ihrem freien Ende ansetzenden, einen Kulissenstein tragenden Distanzstücks mit einer geeignet geformten Kulissenbahn zu koppeln. Hierdurch wird sowohl das Öffnen des Klemmmauls beim Vorschub als auch sein Schließen beim Rückzug des Klemmgliedes durch laterale Wechselwirkung der Kulissensteine mit den zugeordneten Kulissenbahnen erzwungen. Dies ist insofern nachteilig, als eine geschlossene Kulissenbahn viel Bauraum benötigt, der im Inneren eines kompakten Ventils nicht vorhanden ist. Zudem muss eine bidirektional wirkende Kulissenbahn zur Vermeidung von Totwegen sehr filigran und toleranzarm ausgebildet sein, was die Fertigung verteuert und bei Abnutzung leicht zu Verklemmungen und Schäden führen kann.

Die DE 1 167 137 offenbart ein hinsichtlich der Kinematik des Klemmmauls umgekehrt wirkendes Quetschventil. Hier schließen sich die Klemmbacken beim Vorschub des Stößels, um den Schlauch zwischen sich klemmend zu verschließen. Beim Rückzug des Stößels öffnet das Klemmmaul wieder. Dies ist in zweifacher Hinsicht nachteilig. Zum einen wird das oben geschilderte Problem des sich nicht selbsttätig öffnenden Schlauchs nicht gelöst. Zum andern wird die Klemmkraft nicht direkt, sondern über eine hebelvermittelte Kraftumlenkung aufgebracht, deren Übersetzung eine hohe Betätigungskraft am Stößel erfordert.

Aus der EP 0 634 595 A1 ist ein Quetschventil mit zwei synchronisierten, einander gegenüberliegend und jeweils beidseitig bidirektional geführten Klemmmäulern bekannt. Einen ähnlichen Mechanismus offenbart die US 6 289 912 B1.

Die US 2 958 502 offenbart ein Quetschventil mit ebenfalls zwei jeweils bidirektional geführten, einander gegenüber liegenden Klemmmäulern. Hier allerdings bewirken deren freie Klauenenden die Klemmung und die Maulgründe der Klemmmäuler wirken auf die Falzkanten des geklemmten Schlauchs, um diesen beim Öffnen des Quetschventils aktiv zu öffnen.

Die EP 2 966 326 A2 offenbart ein guillotinenartig wirkendes Quetschventil, bei dem ein steifer, konkav geformter Klemmsteg in eine quer zur Schlauchführungsrichtung orientierte Lücke in der Schlauchführung vorgeschoben wird.

Aus der CN 108 050 268 A ist eine Vorrichtung mit einem höchst komplizierten Hebelwerk bekannt.

### Aufgabenstellung

Es ist die Aufgabe der vorliegenden Erfindung, ein gattungsgemäßes Quetschventil derart weiterzubilden, dass die mechanische Zwangsführung der Klemmbacken robuster, raumsparender und kostengünstiger fertigbar wird.

### Darlegung der Erfindung

Diese Aufgabe wird in Verbindung mit den Merkmalen des Oberbegriffs von Anspruch 1 dadurch gelöst, dass das Klemmglied zwischen zwei sich parallel zur Schlauch- sowie zur Stößelführungsachse erstreckenden Seitenwänden eines Ventilgehäuses gelagert ist, welche jeweils eine sich parallel zur Schlauchführungsachse erstreckende und in Bezug auf die Stößelvorschubrichtung rückspringende Stufe aufweisen, wobei die Klemmbacken bei einer Verschiebung des Klemmgliedes mit ihren schlauchführungsabgewandten Außenseiten an den Seitenwänden anliegend über besagte Stufen hinwegfahren, wobei die mechanische Zwangsführung unidirektional durch Wechselwirkung der Außenseiten der Klemmbacken mit den gestuften Seitenwänden erzielt wird.

Bevorzugte Ausführungsformen sind Gegenstand der abhängigen Ansprüche.

Der Erfindung liegt die Erkenntnis zugrunde, dass es zur Erzwingung der oben erläuterten Klemmmaulbewegung keiner bidirektional wirkenden Zwangsführung sondern lediglich einer beim Klemmgliedrückzug wirksamen, unidirektionalen Zwangsführung bedarf. Beim Vorschub des Klemmgliedes, d.h. beim Schließen des Quetschventils bewirkt bereits die vom Schlauch dem Klemmgliedvorschub entgegenwirkende Gegenkraft, die am Grund des Klemmmauls und den dort angelenkten Endbereichen der Klemmbacken ansetzt, eine Verschwenkung der Klemmbacken nach außen bzw. ihre Stabilisierung in einer nach außen verschwenkten Stellung, die der Offenstellung des Klemmmauls entspricht. Auch ein ohne jegliche Zwangsführung ausgestattetes Quetschventil mit verschwenkbaren Klemmbacken würde zumindest beim Vorschub seines Klemmgliedes, d.h. beim Schließen, korrekt arbeiten. Einer Zwangsführung bedarf es lediglich beim Öffnen des Ventils, d.h. beim Rückzug des Klemmgliedes, wenn sich das Klemmmaul entgegen der Steifigkeit des Schlauchs durch Verschwenkung der Klemmbacken nach innen schließen soll. Diese unidirektionale Zwangsführung wird erfindungsgemäß durch die Wechselwirkung der Klemmbacken-Außenseiten mit den gestuften Seitenwänden erzielt. Durch die rückspringenden Stufen in den Seitenwänden ist der Kanal, in dem sich das Klemmglied bewegt, im hinteren Bereich, in dem sich die Klemmbacken befinden, wenn des Klemmglied in seiner Rückzugposition steht, schmaler als im vorderen Bereich, in dem sich die Klemmbacken befinden, wenn das Klemmglied in seiner Vorschubposition steht. Beide Kanalbereiche sind so dimensioniert, dass die Außenseiten der Klemmbacken wenigstens punktuell an den Seitenwänden anliegen - jedoch in unterschiedlicher Schwenkposition. In der Rückzugsposition des Klemmgliedes erlaubt die dort schmale Kanalweite, d.h. der dort geringe Abstand der Seitenwände voneinander, keine vollständige Auffaltung der Klemmbacken, d.h. keine vollständige Öffnung des Klemmmauls. In der Vorschubposition gestattet die dort größere Kanalweite, d.h. der dort größere Abstand der Seitenwände voneinander, eine deutlich weitere Auffaltung der Klemmbacken, d.h. eine deutlich weitere Öffnung des Klemmmauls. Beim Vorschub des Klemmgliedes bewirkt die vom gequetscht werdenden Schlauch aufgebrachte Gegenkraft stets eine im Rahmen der jeweiligen räumlichen Gegebenheiten maximale Öffnung des Klemmmauls. Nahe der Rückzugsstellung ist diese noch unvollständig. Sobald jedoch die Kontaktstellen der Klemmbacken-Außenseiten die erfindungsgemäße Stufe überfahren haben, stehen die Seitenwände einer weiteren Öffnung des Klemmmauls nicht mehr entgegen, sodass die Klemmbacken, getrieben von der vom Schlauch aufgebrachten Gegenkraft, weiter nach außen verschwenken, sodass der Schlauch vom Maulgrund des weitgehend oder - bevorzugt - vollständig geöffneten Klemmmauls gequetscht wird. Beim Rückzug des Klemmgliedes wird das Klemmmaul, sobald die Kontaktstellen an den Klemmbacken-Außenseiten die erfindungsgemäßen Stufen überfahren, zu einer Schließbewegung gezwungen, da, wie oben erläutert, für eine vollständige Öffnung hier der zwischen den Seitenwänden vorhandene Platz schlicht nicht ausreicht. Die Schließbewegung des Klemmmauls hat die aus dem Stand der Technik grundsätzlich bekannte und eingangs bereits erläuterte Wirkung, dass die freien Enden der klauenartigen Klemmbacken einen Druck auf die Falzkanten des gequetschten Schlauchs ausüben, der dann zu einer Wieder-Öffnung des zuvor verschlossenen Schlauchlumens führt.

Die Einbringung der erfindungsgemäßen Stufe in die bei kompakten Quetschventilen ohnehin vorhandenen Seitenwände ist fertigungstechnisch leicht. Eine Stufenstruktur in einer massiven Wand ist auch extrem robust und weitgehend verschleißsicher. Auch ist eine solche Struktur keinesfalls filigran, sodass auch große Toleranzen, die durch Fertigung, Verschleiß der Klemmbacken-Gelenke, rotative Fehlpositionierung des Klemmgliedes o.ä. zustande kommen können, die Funktionalität des Ventils nicht einschränken.

Bevorzugt sind die Stufen flachwinklig angeschrägt ausgebildet, sodass sich die Schließ- bzw. Öffnungsbewegung des Klemmmauls über einen größeren Rückzug- bzw. Vorschubweg des Klemmgliedes erstreckt, was die Funktionssicherheit erhöht und Verschleiß entgegenwirkt.

Weiter oben wurde bereits die Möglichkeit einer rotativen Fehlpositionierung des Klemmgliedes erwähnt, die dank der Erfindung bis zu einem gewissen Maß tolerabel ist. Gleichwohl darf sie nicht überhand nehmen. Bei einer Weiterbildung der Erfindung ist daher vorgesehen, dass die Seitenwände jeweils eine parallel zur Stößelführungsachse erstreckte, erste Klemmglied-Führungsnut aufweisen, auf deren Nutgrund die Außenseite der jeweils zugeordneten Klemmbacke anliegt. Die Kontaktstellen der Klemmbacken-Außenseiten laufen also bei Verschiebung des Klemmgliedes am Nutgrund der ersten Klemmglied-Führungsnuten entlang. Die Seitenwände dieser ersten Klemmglied-Führungsnuten bilden also einen in Verschieberichtung des Klemmgliedes gerichteten Führungskanal, der einer Rotation des Klemmgliedes um seine Stößelführungsachse entgegenwirkt. Die Relativdimensionierung von Nutweite zu Klemmbackendicke kann der Fachmann nutzen, um geeignete Toleranzen in Bezug auf die Rotation des Klemmgliedes einzustellen. Der Fachmann wird verstehen, dass die erfindungsgemäße Stufe selbstverständlich (wenigstens auch) am Nutgrund einer solchen ersten Klemmglied-Führungsnut vorhanden sein muss, da sich bei der genannten Weiterbildung der Erfindung die erfindungswesentliche Wechselwirkung zwischen Seitenwand, insbesondere Stufe, und Klemmbacken-Außenseite genau hier vollzieht.

Günstigerweise tragen die Klemmbacken an ihren Außenseiten jeweils eine Kontaktrolle, die um eine parallel zur Schlauchführungsachse ausgerichtete Drehachse drehbar ist und mit der die jeweilige Klemmbacke an der ihr zugeordneten Seitenwand anliegt. Mit anderen Worten wird also der bislang lediglich als Kontaktstelle bezeichnete Bereich der Klemmbacken-Außenseite in Form einer drehbaren Rolle ausgebildet. Dadurch wird die Reibung zwischen der Klemmbacken-Außenseite und der Seitenwand reduziert, was einerseits eine bessere Leichtgängigkeit des Systems bewirkt und andererseits den durch Betrieb verursachten Verschleiß reduziert. Im bevorzugten Fall, dass die klauenartige Formgebung der Klemmbacken zu einer geknickten Linienführung der Klemmbacken-Außenseite führt, sind die Kontaktrollen bevorzugt in diesem Knickbereich positioniert.

Bevorzugt sind die Kontaktrollen toroidal geformt; dies insbesondere bei Ausführungsformen, bei denen sie in einer ersten Klemmglied-Führungsnut laufen. Die toroidale Rollenform kann einerseits rotative Fehlstellungen des Klemmgliedes ausgleichen. Andererseits führt eine Wechselwirkung mit den Seitenwänden der ersten Klemmglied-Führungsnuten nur zu geringer Reibung.

Der Stößel des Klemmgliedes ist bevorzugt mehrteilig ausgebildet mit einem Stößelschaft und einer Stößelspitze, an welcher die Klemmbacken angelenkt sind. Die Stößelspitze ist günstigerweise lösbar mit dem Stößelschaft verbunden und zwar besonders bevorzugt über einen Kugelrastmechanismus. Im Gegensatz zum Stößelschaft ist die mit den Klemmbacken bewehrte Stößelspitze einem nicht unerheblichen Verschleiß unterworfen. Entsprechend ist ihre separate Auswechselbarkeit wünschenswert, was durch die genannte lösbare Mehrteiligkeit erreicht wird. Darüber hinaus kann die Austauschbarkeit der Stößelspitze samt Klemmbacken auch zur Anpassung des Quetschventils an unterschiedliche Schlauchgrößen genutzt werden. Die Dimensionierung der Klemmbacken, insbesondere die resultierende Klemmmaulweite, sollte auf die Schlauchgröße abgestimmt sein. Unterschiedliche Schlauchgrößen gelangen daher nach Klemmgliedern, die zumindest im Bereich des Klemmmauls unterschiedlich dimensioniert sind. Durch die genannte Weiterbildung der Erfindung lässt sich eine solche Anpassung durch einfachen Austausch der Stößelspitze durchführen, ohne dass der Stößelschaft von seinem motorischen Antrieb gelöst werden müsste. Da ein solcher Austausch der Stößelspitze im Routinebetrieb recht häufig vorkommen kann, ist es günstig, eine einfach handhabbare Kopplung zwischen Stößelschaft und Stößelspitze zu realisieren. Diese muss jedoch gleichwohl eine absolute Betriebssicherheit zeigen. Hier haben sich die bevorzugt eingesetzten Kugelrastmechanismen bewährt.

Außer der Klemmmaulweite sollte auch die Weite der Schlauchführung auf die jeweilige Schlauchgröße abgestimmt werden. Um auch hier eine leichte Anpassbarkeit zu gewährleisten, ist bei einer besonders bevorzugten Ausführungsform der Erfindung vorgesehen, dass die Schlauchführung aus zwei axial voneinander beabstandeten, austauschbaren Gehäuseeinsätzen, insbesondere aus Kunststoff, besteht, die gemeinsam eine unterbrochene, entlang der Schlauchführungsachse erstreckte Rundbodennut bilden, wobei das Klemmglied in einem Freiraum zwischen den beiden Gehäuseeinsätzen angeordnet ist. Die Nutweite bzw. der Krümmungsradius der Rundbodennut ist jeweils für eine Schlauchgröße optimiert. Beim Wechsel der Schlauchgröße empfiehlt es sich, auch die Schlauchführung, mithin die beiden Gehäuseeinsätze gegen solche mit für die neue Schlauchgröße optimierter Dimensionierung auszutauschen. Zudem unterliegen solche Gehäuseeinsätze einem nicht unerheblichen Verschleiß. Daher ist es günstig, sie aus preiswertem Kunststoff zu fertigen, wohingegen das Gehäuse, welches dem Gesamtsystem seine Stabilität verleiht, bevorzugt aus Metall gefertigt ist. Die Anordnung der Gehäuseeinsätze beidseitig des Klemmgliedes sorgt für eine stabile Fixierung des Schlauchs beidseitig der Quetschregion, was ein Verrutschen verhindert und die Reproduzierbarkeit der Ventilfunktion optimiert.

Bevorzugt weisen die Gehäuseeinsätze in ihren einander zugewandten Stirnseiten jeweils eine parallel zur Stößelführungsachse erstreckte, zweite Klemmglied-Führungsnut auf, in die jeweils ein korrespondierender Führungsvorsprung des Klemmgliedes eingreift. Ähnlich wie die oben erwähnten ersten Klemmglied-Führungsnuten wirken auch die zweiten Klemmglied-Führungsnuten einer Rotation des Klemmgliedes um seine Stößelführungsachse entgegen. Die zweiten Klemmglied-Führungsnuten können recht tief gestaltet sein und daher eine sehr präzise Führung für das Klemmglied bilden, ohne dass dies zu einer Vergrößerung der Außendimensionen des Quetschventils führen würde, wie dies bei einer entsprechend tiefen Gestaltung der ersten Klemmglied-Führungsnuten der Fall wäre.

Die Schwenkachsen der Klemmbacken sind bevorzugt miteinander identisch, d. h. beide Klemmbacken sind bevorzugt um dieselbe Schwenkachse schwenkbar. Insbesondere bei Klemmventilen mit großvolumigen Schläuchen kann es jedoch auch sinnvoll sein, die Schwenkachsen der beiden Klemmbacken mit Parallelversatz zueinander anzuordnen. Hierdurch kann die Tiefe des Klemmmauls reduziert werden.

Das Widerlager ist günstigerweise Bestandteil eines öffenbaren Gehäusedeckels. Bei geöffnetem Deckel können leicht alle austauschbaren Elemente eingesetzt und der Schlauch in die Schlauchführung eingelegt werden. Der Zugang zum Ventilinneren erfolgt dabei in einem Bereich, der nicht durch einen motorischen Antrieb des Stößels in Anspruch genommen wird. Vielmehr liegt dieser auf der deckelabgewandten Seite des Gehäuses. Nach dem Schließen des Deckels, bei dem zugleich das Widerlager in seine dem Klemmglied exakt gegenüberliegende Arbeitsposition gebracht wird, kann der Betrieb des erfindungsgemäßen Ventils unverzüglich beginnen.

Weitere Einzelheiten und Vorteile der Erfindung ergeben sich aus der nachfolgenden speziellen Beschreibung und den Zeichnungen.

### Kurzbeschreibung der Zeichnungen

Es zeigen:
- Figur 1:: eine Explosionsdarstellung eines erfindungsgemäßen Quetschventils,
- Figur 2:: eine perspektivische Darstellung des Quetschventils von Figur 1 im Zusammenbauzustand mit geschlossenem Deckel,
- Figur 3:: eine Schnittdarstellung durch das Quetschventil von Figur 2 im geöffneten Ventilzustand,
- Figur 4:: eine Schnittdarstellung durch das Quetschventil von Figur 2 im geschlossenen Ventilzustand,
- Figur 5:: eine perspektivische Darstellung des Quetschventils von Figur 1 im Zusammenbauzustand mit geöffnetem Deckel,
- Figur 6:: eine Schnittdarstellung des Gehäusekörpers des Quetschventils von Figur 1 sowie
- Figur 7:: eine Schnittdarstellung des Gehäusekörpers des Quetschventils von Figur 1 ohne Bolzen.

### Beschreibung bevorzugter Ausführungsformen

Gleiche Bezugszeichen in den Figuren deuten auf gleiche oder analoge Elemente hin.

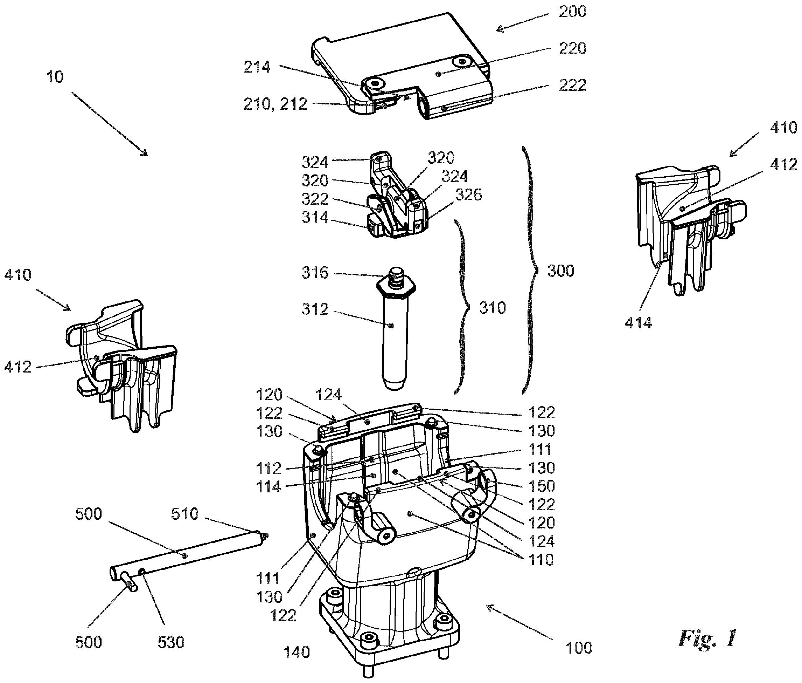

Figur 1 zeigt eine Explosionsdarstellung eines Quetschventils 10 gemäß der vorliegenden Erfindung. Das Quetschventil 10 umfasst einen Gehäusekörper 100 mit längs erstreckten Seitenwänden 110 und mit U-förmigen Ausnehmungen versehenen Stirnwänden 111.

An ihren Oberkanten tragen die Seitenwände 110 des Gehäusekörpers 100 jeweils eine Deckel-Führungsnut 120, die bei der dargestellten Ausführungsform als zwei um eine Lücke 124 voneinander beabstandete Abschnitte 122 ausgebildet sind.

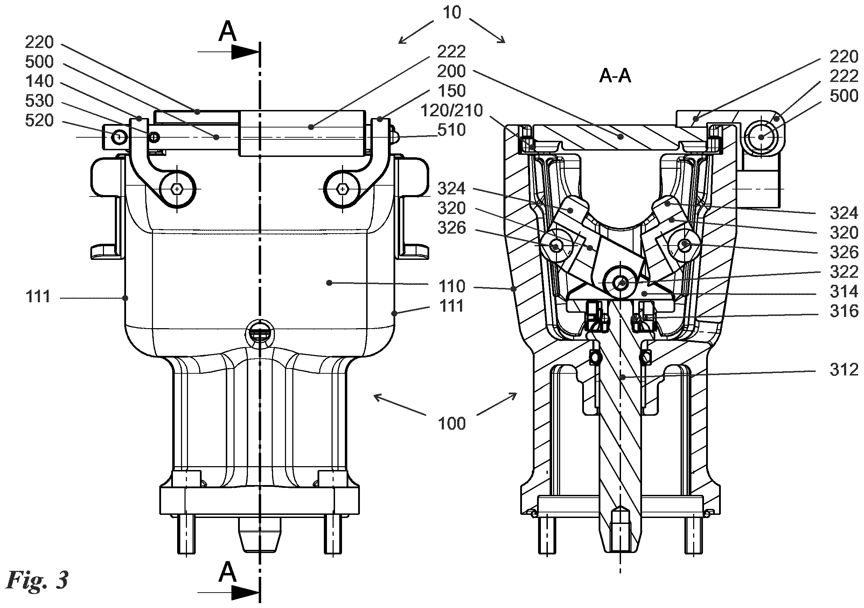

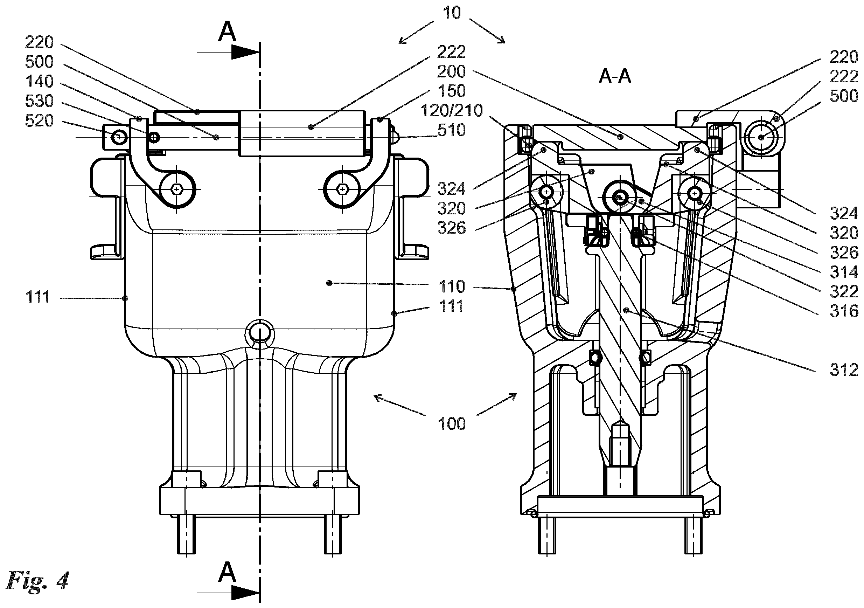

An zentraler Position weisen die Innenseiten der Seitenwände 110 des Gehäusekörpers 100 jeweils eine vertikal erstreckte erste Klemmglied-Führungsnut 114 auf, die eine längs erstreckte Stufe 112 zeigt. Auf die Funktion der Stufe 112 soll weiter unten im Kontext der Figuren 3 und 4, die jeweils eine Schnittdarstellung durch das Quetschventil 10 in der Ebene der ersten Klemmglied-Führungsnuten zeigen, noch näher eingegangen werden.

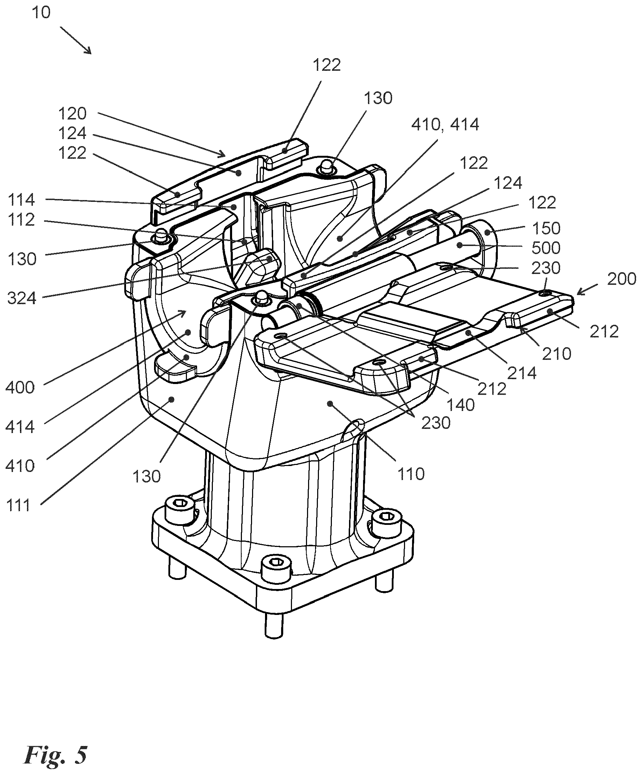

In den Hohlraum des Gehäusekörpers 100 sind Gehäuseeinsätze 410 einsetzbar, die Abschnitte einer Rundbodennut 412 aufweisen und gemeinsam mit den Ausnehmungen der Stirnwände 111 des Gehäusekörpers 100 eine Schlauchführung 400 für einen nicht dargestellten, längs erstreckten, medienleitenden, flexiblen Schlauch bilden. Diese Schlauchführung 400 ist insbesondere in der Darstellung von Figur 5 gut erkennbar. An ihren einander zugewandten Stirnseiten weisen die Gehäuseeinsätze 410 jeweils eine vertikal erstreckte, Klemmglied-Führungsnut 414 auf, auf deren Funktion weiter unten noch näher eingegangen werden soll.

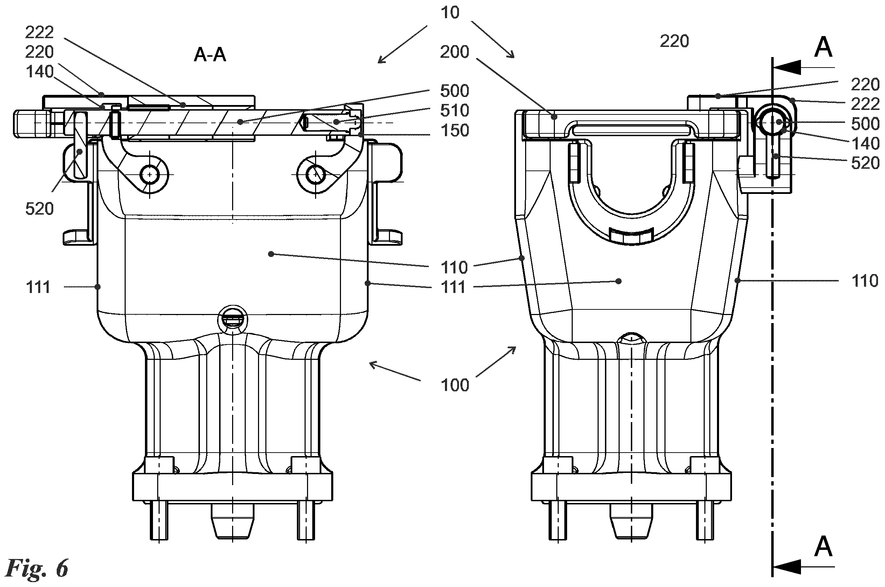

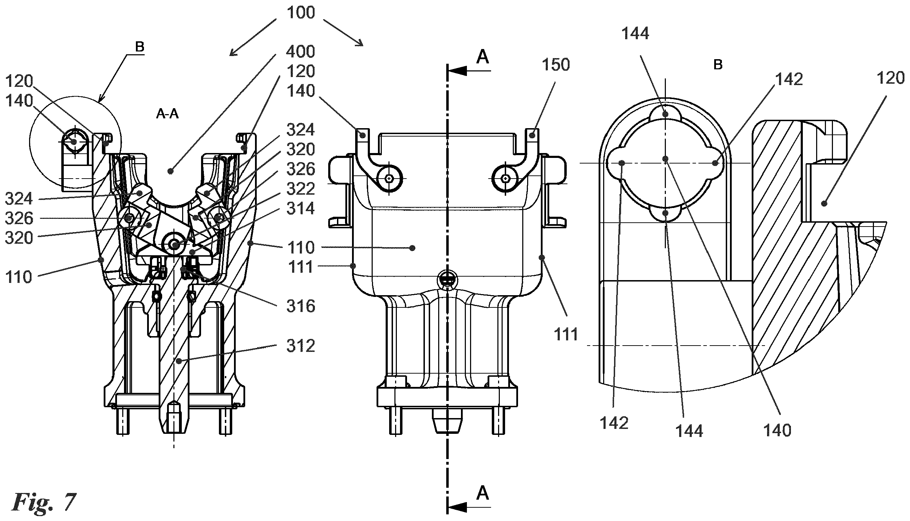

Eine der Seitenwände 110 des Gehäusekörpers 100 trägt an ihrer Außenseite ein erstes Auge 140 und ein zweites Auge 150, die in Längsrichtung voneinander beabstandet derart ausgebildet und ausgerichtet sind, dass ein Bolzen 500 in sie eingeschoben werden kann, um so eine axiale und rotative Gleitlagerung zu erfahren. Das erste Auge 140 ist bei der gezeigten Ausführungsform als Durchgangsöffnung ausgebildet, das zweite Auge 150 als Sacköffnung. Bei der dargestellten Ausführungsform weist der Bolzen 500 an seinem distalen Ende ein federvorgespanntes Anschlagelement 510 und an seinem proximalen Ende einen Betätigungshebel 520 auf. Zudem weist bei der dargestellten Ausführungsform der Bolzen 500 zwischen seinen beiden Enden in naher Nachbarschaft zum Betätigungshebel 520 einen Radialvorsprung 530 auf. Auf diese Elemente und ihre Funktion soll weiter unten im Kontext der Figuren 6 und 7 noch näher eingegangen werden.

Weiter umfasst das Quetschventil 10 einen Deckel 200, dessen Längsseiten jeweils mit einer Führungskante 210 bewehrt sind. Die Führungskanten 210 sind bei der dargestellten Ausführungsform in jeweils zwei Abschnitte 212 unterteilt, die um eine Lücke 214 voneinander beabstandet sind. Diese Verhältnisse sind insbesondere in Figur 5 deutlich erkennbar. Die Führungskanten 210 wechselwirken bei Betrieb mit den Deckel-Führungsnuten 120 des Gehäusekörpers 100. Hierbei lassen sich die Führungskanten 210 in die Deckel-Führungsnuten 120 einführen, sodass die genannten Elemente miteinander eine verschiebliche Gleitlagerung des Deckels 200 am Gehäusekörper 100 bilden. Durch Längsverschiebung des Deckels 200 kann der oben offene Gehäusekörper 100 also nach dem Prinzip des Schiebedeckels geschlossen bzw. geöffnet werden. Die geschlossene Schiebestellung des Deckels ist definiert durch vier in den Laufflächen des Gehäusekörpers 100 eingebrachte, federvorbelastete Kugelkopfstifte 130, die in korrespondierende Rastausnehmungen 230 in der Unterseite des Deckels 200 einrasten. Diese Restausnehmungen 230 sind in Figur 5 erkennbar. Die Abschnitte 122 und die Lücke 124 der Deckel-Führungsnuten 120 des Gehäusekörpers 100 sind derart auf die korrespondierenden Abschnitte 212 und die Lücke 214 der Führungskanten 210 des Deckels 200 abgestimmt, das zumindest eine Schiebeposition des Deckels existiert, in der zwei einander gegenüberliegende Abschnitte 212 der Führungskanten 210 des Deckels 200 in den einander gegenüberliegenden Lücken 124 der Deckel-Führungsnuten 120 des Gehäusekörpers 100 zu liegen kommen, sodass der Deckel 200 senkrecht vom Gehäusekörper 100 abgehoben bzw. von diesem um eine parallel zu seinen Seitenwänden liegende Schwenkachse verschwenkt werden kann.

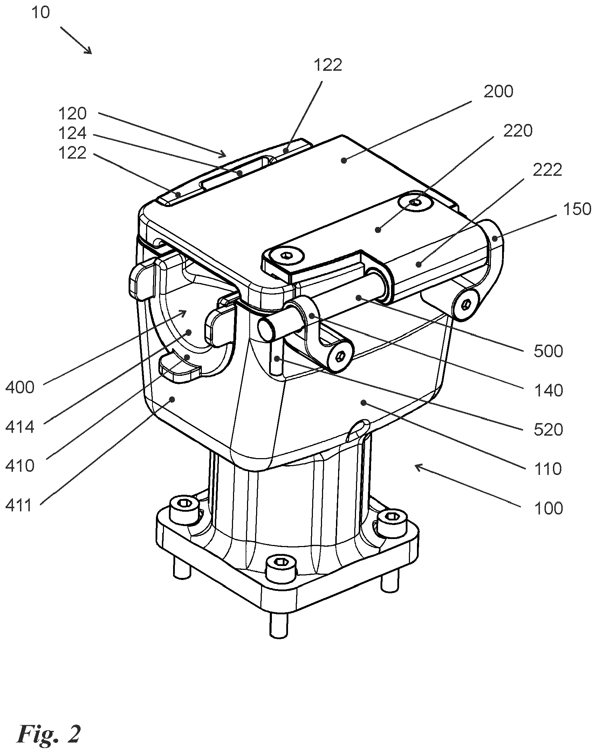

Um eine solche Schwenkachse zur Verfügung zu stellen, weist der Deckel 200 eine Lasche 222 auf, welche eine seiner Führungskanten 210 lateral überkragt. An ihrem lateral äußeren Ende trägt die Lasche 220 eine Hülse 222, die im Zusammenbauzustand des Gehäuses, wie insbesondere in den Figuren 2 und 5 erkennbar, mit den Augen 140, 150 und dem in diese eingeschobenen Bolzen 500 fluchtet, sodass der Bolzen 500 gemeinsam mit der Hülse 222 ein axiales und rotatives Schwenklager für die Hülse 222 und somit für den Deckel 200 bildet. Dabei ist zu beachten, dass die Länge der Hülse 222 kürzer dimensioniert ist als der Abstand zwischen den beiden Augen 140, 150, sodass eine Axialverschiebung des Deckels 200 relativ zum Gehäusekörper 100 möglich ist; insbesondere, wenn die Führungskanten 210 des Deckels in Eingriff mit den Deckel-Führungsnuten 120 des Gehäusekörpers 100 stehen.

Weiter zeigt Figur 1 ein Klemmglied 300, umfassend einen Stößel 310 und zwei Klemmbacken 320. Der Stößel 310 ist bei der dargestellten Ausführungsform zweigeteilt ausgebildet, nämlich mit einem Stößelschaft 312 und einer Stößelspitze 314, welche eine Anlenkung 322 für die Klemmbacken 320 trägt. Die Klemmbacken 320 sind klauenartig ausgebildet und weisen an ihren Spitzen jeweils aufgebogene Klauenenden 324 auf. Am Knickpunkt der Klauenenden 324 weisen die Klemmbacken 320 an ihren Außenseiten jeweils eine Kontaktrolle 326 zur Wechselwirkung mit den ersten Klemmglied-Führungsnuten 114 des Gehäusekörpers 100 auf, worauf weiter unten noch näher eingegangen wird.

Der Stößelschaft 312 und die Stößelspitze 314 sind mittels eines Kugelrastmechanismus 316, der insbesondere in der Schnittdarstellung der Figuren 3 und 4 besser erkennbar ist, lösbar miteinander verbindbar.

Figur 2 zeigt das Quetschventil 10 im Zusammenbauzustand mit geschlossenem Deckel 200. Die Figuren 3 und 4 zeigen jeweils eine Schnittdarstellung des Quetschventils 10 von Figur 2 in Ventil-Öffnungsstellung (Figur3) und VentilSchließstellung (Figur 4). Die Schnittebenen A-A in den Figuren 3 und 4 sind jeweils in der links neben der Schnittzeichnung dargestellten Hilfszeichnung markiert. Man erkennt, dass der Schnitt quer zur Längsrichtung des Quetschventils 10, d.h. quer zur Schlauchführungsrichtung und mittig verläuft, sodass die Schnittebene exakt mittig der ersten Klemmglied-Führungsnuten 114 verläuft. Aufgrund der Stufe 112, ist der zwischen den Seitenwänden gebildete Kanal in seinem unteren Bereich schmaler als in seinem oberen Bereich. In der Ventil-Öffnungsstellung, d.h. der in Figur 3 gezeigten Rückzugsstellung des Klemmgliedes 300, befinden sich die Klemmbacken 320 im unteren, schmaleren Kanalbereich. Sie liegen mit ihren Kontaktrollen 326 am Nutgrund der ersten Klemmglied-Führungsnuten 312 an. Die Relativdimensionierung ist, wie in Figur 3 erkennbar, so gewählt, dass das durch die Klemmbacken 320 gebildete Klemmmaul nicht vollständig geöffnet ist. Gleichwohl ist der Freiraum über dem Klemmmaul bis zur Unterseite des Deckels 200 groß genug, um einen flexiblen, medienleitenden Schlauch in der Schlauchführung 400 zu positionieren; insbesondere durch Einlegen des Schlauchs in die Rundbodennuten 412 der Gehäuseeinsätze 410.

Zum Schließen des Ventils wird das Klemmglied 300 auf den Deckel zu verschoben, sodass der Maulgrund des Klemmmauls den Schlauch gegen den als Widerlager wirkenden Deckel 200 presst und dabei das Lumen des Schlauchs verengt oder vollständig verschließt. Während des Vorschubs des Stößels 310 überfahren die Kontaktrollen 326 die Stufe 112 und gelangen somit in den oberen, breiteren Kanalbereich, in dem sich das Klemmmaul vollständig öffnen kann. Diese Öffnung des Klemmmauls wird durch die dem Stößelvorschub entgegenwirkende Elastizität des Schlauches erzwungen.

Beim Wieder-Öffnen des Ventils wird der Stößel zurückgefahren. Die Kontaktrollen 326 überwinden erneut die Stufe 112, sodass die Klemmbacken 320 durch den geringeren Abstand der Seitenwände 110 im unteren Kanalbereich aufeinander zu verschwenkt werden, sodass sich das Klemmmaul dabei teilweise wieder schließt. Hierbei drücken die Klauenenden 324 von lateral außen auf die Falzbereiche des noch nicht vollständig geöffneten Schlauchs und unterstützen so die Wieder-Öffnung seines Lumens auch in Fällen, in denen die Eigenelastizität des Schlauches, beispielsweise wegen eines Anhaftens der Schlauchinnenwände aneinander, nicht ausreicht. Die durch die Stufe 112 in Wechselwirkung mit den Kontaktrollen 326 bewirkte Zwangsführung der Klemmbacken 320 stellt eine mechanisch einfache, sehr robuste Möglichkeit dar, zuverlässig die unverzügliche, vollständige Wieder-Öffnung des Schlauchlumens beim Öffnen des Quetschventils 10 zu erzwingen. Die Anordnung der Stufe 112 in den ersten Klemmglied-Führungsnuten 114 ist für die Funktionalität nicht zwingend, aber vorteilhaft, da hierdurch eine Rotation des Klemmgliedes 300 um seine Stößelachse verhindert wird. Eine weitere Maßnahme zur Verhinderung einer solchen Rotation stellen die zweiten Klemmglied-Führungsnuten 114 in den einander gegenüberliegenden Seiten der Gehäuseeinsätze 410 der Schlauchführung 400 dar. Sie wechselwirken mit Längsvorsprüngen der Stößelspitze 314, die in Figur 1 ohne besonderes Bezugszeichen erkennbar sind.

Zum Austausch des Schlauchs und/oder der Gehäuseeinsätze und/oder des Klemmgliedes und/oder Teilen davon muss der Deckel 200 geöffnet werden. Wie oben bereits erläutert, ist die in Figur 2 gezeigte Schließstellung des Deckels definiert durch den Rasteingriff der federvorgespannten Kugelkopfstifte 130 des Gehäusekörpers 100 in die korrespondierenden Rastausnehmungen 230 des Deckels 200. Zudem sind in dieser Schließstellung die Führungskanten 210 des Deckels 200 in den korrespondierenden Deckel-Führungsnuten 120 des Gehäusekörpers 100 geführt. Dies bedeutet, dass die Abschnitte 212 der Führungskanten 210 des Deckels 200 mit den korrespondierenden Abschnitten 122 der Deckel-Führungsnuten 120 des Gehäusekörpers 100 kolokalisiert sind. Ein senkrechtes Abheben oder ein Verschwenken des Deckels ist in diesem Zustand nicht möglich. Aufgrund der federvorgespannten Kugelkopf-Rastung 130/230 ist der Deckel 200 in dieser Position vertikal und horizontal spielfrei fixiert. Die Hülse 222, die den Bolzen 500 koaxial umgreift, muss in dieser Position keine Kräfte abstützen.

Eine Verschiebung des Deckels in Längsrichtung ist unter Aufwendung einer dem Rastmechanismus 130/230 überwindenden Längskraft möglich. Die Hülse 222 wird dabei auf dem in den Augen 140, 150 gelagerten Bolzen - nach wie vor kräftefrei - längs, d.h. in Bolzenaxialrichtung, verschoben. In einer Schiebestellung, in der die Abschnitte 212 der Führungskante 210 des Deckels 200 auf Lücke mit den Abschnitten 122 der Deckel-Führungsnuten 120 des Gehäusekörpers 100 geraten, wird ein Abheben bzw. eine Verschwenkung des Deckels möglich, wobei die Federvorspannung der Kugelkopfstifte 130 den Deckel bei Erreichen dieser Schiebestellung hochdrücken und die Schiebestellung so erkennbar markieren. In diesem Zustand kann die Hülse 222 gemeinsam mit dem Bolzen 500 als Schwenklager für den Deckel 200 dienen, sodass dieser in die in Figur 5 dargestellte, aufgeschwenkte Position überführt werden kann. In dieser Position ist das Innere des Gehäusekörpers 100 zugänglich - insbesondere zu Zwecken des Austauschs von Schlauch, Gehäuseeinsätzen 410 und/oder Klemmglied 300 bzw. Teilen davon.

Das Schließen des Deckels 200 erfolgt in umgekehrter Reihenfolge wobei die durch die Hülse 222 und den Bolzen 500 realisierte Axialführung ein sicheres, verkantungsfreies Einführen der Führungskanten 210 des Deckels 200 in die Deckel-Führungsnuten 120 des Gehäusekörpers 100 ermöglicht.

Wie erwähnt, ist die Wechselwirkung zwischen Hülse 222 und Bolzen 500 im Wesentlichen axialkräftefrei. Dies ist jedoch eine idealisierte Annahme. In der Praxis können sich, insbesondere durch dauerhafte Vibrationen, auf den Bolzen 500 wirkende Axialkräfte ergeben. Daher ist bei der gezeigten Ausführungsform eine Axialfixierung des Bolzens vorgesehen, die zugleich eine Entnahme des Bolzens zum Zweck der vollständigen Entfernung des Deckels 200 ermöglicht. Zur Illustration wird auf die Figuren 6 und 7 verwiesen, die unterschiedliche Schnittdarstellungen entlang der Schnittebenen A-A, wie in den rechts neben der jeweiligen Schnittdarstellung gezeigten Hilfszeichnungen angedeutet. Figur 7 zeigt zugleich eine vergrößerte Darstellung des Ausschnitts B der entsprechenden Schnittzeichnung.

Wie in besagter Vergrößerungsdarstellung des ersten Auges 140 in Figur 7 erkennbar, trägt das als Durchgangsöffnung ausgebildete, erste Auge 140 eine erste Nut 142, die als das Auge in Längsrichtung durchsetzende Durchgangsnut ausgebildet ist. In einem Winkelabstand von 90° ist eine zweite Nut 144 angeordnet, die als längs erstreckte Sacknut ausgebildet ist, deren dem zweiten Auge 150 zugewandte Stirnseite offen ist. Beim Einführen des Bolzens 500 in das erste Auge wird dieser mithilfe des Betätigungshebels 520 so ausgerichtet, dass sein Radialvorsprung 530 in die erste Nut 242 eingeführt wird. Der Bolzen wird dabei so weit vorgeschoben, dass der Radialvorsprung 530 die erste Nut 142 vollständig quert und zwischen den beiden Augen 140, 150 zu liegen kommt. Insbesondere in der letzten Phase erfolgt diese Bewegung gegen die Federkraft des federvorgespannten Anschlagelementes 510, welches in dieser Phase an der geschlossenen Rückwand des als Sacköffnung ausgebildeten zweiten Auges 150 anschlägt. Im Anschluss wird der Bolzen mittels des Betätigungshebels 520 um 90° verdreht, sodass sein Radialvorsprung 530 vor dem Eingang der zweiten Nut 144 zu liegen kommt. Durch die Federkraft des Anschlagelementes 510 wird der Bolzen 500 beim Loslassen des Betätigungsgliedes 520 in die als Sacknut ausgebildete zweite Nut 144 hineingedrückt, wobei diese Rückwärtsbewegung des Bolzens 500 beim Anschlag des Radialvorsprungs 530 am geschlossenen Ende der zweiten Nut 144 endet. Der Bolzen 500 ist dabei so dimensioniert, dass sein distales Ende in dieser Situation noch nicht aus dem als Sacköffnung ausgebildeten zweiten Auge 150 frei kommt. Der Bolzen 500 ist damit axial und rotativ gesichert.

Zur Entnahme des Bolzens 500 bedarf es eines Drucks auf sein proximales Ende, sodass sein Radialvorsprung 530 gegen die Federkraft des Anschlagelementes 510 aus der Sacknut 144 frei kommt. Verdrehung des Bolzens 500 um 90° positioniert sodann seinen Radialvorsprung 530 wieder vor der Durchgangsnut 142, was ein Herausziehen des ganzen Bolzens aus den beiden Augen 140, 150 ermöglicht. Bei der dargestellten Ausführungsform sind die erste und die zweite Nut 142, 144 jeweils in doppelter Ausführung ausgebildet, sodass die jeweilige Drehrichtung des Bolzens beim Ver- bzw. Entriegeln unmaßgeblich ist.

Der Fachmann wird verstehen, dass die beschriebene, isolierte Fixierung und Entnahme des Bolzens 500 in der Praxis kaum eine Rolle spielt. Wichtiger ist die Anlenkung des Deckels 200 mittels des Bolzens 500. Der oben beschriebene Prozess wird also in der Regel mit in Schließstellung befindlichem Deckel 200 durchgeführt, sodass der Bolzen 500 die dann bereits wohldefiniert positionierte Hülse 222 koaxial durchsetzen kann.

Natürlich stellen die in der speziellen Beschreibung diskutierten und in den Figuren gezeigten Ausführungsformen nur illustrative Ausführungsbeispiele der vorliegenden Erfindung dar. Der Schutzbereich ist durch die beiliegenden Ansprüche definiert.

### Bezugszeichenliste

| | | | |
|---|---|---|---|
| 10 | Quetschventil | 300 | Klemmglied |
| | | 310 | Stößel |
| 100 | Gehäusekörper | 312 | Stößelschaft |
| 110 | Seitenwand | 314 | Stößelspitze |
| 111 | Stirnwand | 316 | Kugelrastmechanismus |
| 112 | Stufe | 320 | Klemmbacke |
| 114 | erste Klemmglied-Führungsnut | 322 | Anlenkung |
| 120 | Deckel-Führungsnut | 324 | Klauenende |
| 122 | Abschnitt von 120 | 326 | Kontaktrolle |
| 124 | Lücke zwischen 122 | | |
| 130 | Kugelkopfstift | 400 | Schlauchführung |
| 140 | erstes Auge | 410 | Gehäuseeinsatz |
| 142 | Durchgangsnut / erste Nut | 412 | Rundbodennut |
| 144 | Sacknut / zweite Nut | 414 | zweite Klemmglied-Führungsnut |
| 150 | zweites Auge | | |
| | | 500 | Bolzen |
| 200 | Deckel | 510 | Anschlagelement |
| 210 | Führungskante | 520 | Bestätigungshebel |
| 212 | Abschnitt von 210 | 530 | Radialvorsprung |
| 214 | Lücke zwischen 212 | | |
| 220 | Lasche | | |
| 222 | Hülse | | |
| 230 | Rastausnehmung | | |

## Patentansprüche

1. Quetschventil (10), umfassend
- eine Schlauchführung (400), die entlang einer Schlauchführungsachse ausgerichtet ist,
- ein Klemmglied (300) mit
• einem Stößel (310), der entlang einer senkrecht zur Schlauchführungsachse ausgerichteten Stößelführungsachse verschieblich gelagert ist, und
• zwei gemeinsam ein Klemmmaul bildenden Klemmbacken (320), die am vorderen, der Schlauchführung (400) zugewandten Ende des Stößels (310) angelenkt und einander entgegengesetzt jeweils um eine parallel zur Schlauchführungsachse ausgerichtete Schwenkachse verschwenkbar sind, sowie
- ein Widerlager, das auf der dem Klemmglied (300) gegenüber liegenden Seite der Schlauchführung (400) angeordnet ist,
wobei das Klemmglied (300) zum Schließen des Quetschventils (10) auf das Widerlager zu vorschiebbar ist, sodass sich beim Vorschub des Klemmgliedes (300) das Klemmmaul öffnet und der Maulgrund des Klemmmauls einen in der Schlauchführung geführten Schlauch - sofern vorhanden - gegen das Widerlager presst und dabei das Lumen des Schlauchs verengt,
und die Klemmbacken (320) mit einer mechanischen Zwangsführung derart gekoppelt sind, dass ein von einer maximal vorgeschobenen Klemmstellung des Klemmgliedes (300) ausgehender Rückzug des Stößels (310) zu einer Schwenkbewegung der Klemmbacken (320) in Schließrichtung des Klemmmaules führt,
**dadurch gekennzeichnet,**
**dass** das Klemmglied (300) zwischen zwei sich parallel zur Schlauch- sowie zur Stößelführungsachse erstreckenden Seitenwänden (110) eines Ventilgehäuses gelagert ist,
welche jeweils eine sich parallel zur Schlauchführungsachse erstreckende und in Bezug auf die Stößelvorschubrichtung rückspringende Stufe (112) aufweisen,
wobei die Klemmbacken (320) bei einer Verschiebung des Klemmgliedes (300) mit ihren schlauchführungsabgewandten Außenseiten an den Seitenwänden (110) anliegend über besagte Stufen (112) hinwegfahren, wobei die mechanische Zwangsführung unidirektional durch Wechselwirkung der Außenseiten der Klemmbacken (320) mit den gestuften Seitenwänden (110) erzielt wird.

2. Quetschventil (10) nach Anspruch 1,
**dadurch gekennzeichnet,**
**dass** die Stufen (112) flachwinklig angeschrägt ausgebildet sind.

3. Quetschventil (10) nach einem der vorangehenden Ansprüche,
**dadurch gekennzeichnet,**
**dass** die Seitenwänden (110) jeweils eine parallel zur Stößelführungsachse erstreckte, erste Klemmglied-Führungsnut (114) aufweisen, auf deren Nutgrund die Außenseite der jeweils zugeordneten Klemmbacke (320) anliegt.

4. Quetschventil (10) nach einem der vorangehenden Ansprüche,
**dadurch gekennzeichnet,**
**dass** die Klemmbacken (320) an ihren Außenseiten jeweils eine Kontaktrolle (326) tragen, die um eine parallel zur Schlauchführungsachse ausgerichtete Drehachse drehbar ist und mit der die jeweilige Klemmbacke (320) an der ihr zugeordneten Seitenwand (110) anliegt.

5. Quetschventil (10) nach Anspruch 4,
**dadurch gekennzeichnet,**
**dass** die Kontaktrollen (320) toroidal geformt sind.

6. Quetschventil (10) nach einem der vorangehenden Ansprüche,
**dadurch gekennzeichnet,**
**dass** der Stößel (310) mehrteilig ausgebildet ist mit einem Stößelschaft (312) und einer Stößelspitze (314), an welcher die Klemmbacken (320) angelenkt sind, wobei die Stößelspitze (314) lösbar, insbesondere über einen Kugelrastmechanismus, mit dem Stößelschaft (312) verbunden ist.

7. Quetschventil (10) nach einem der vorangehenden Ansprüche,
**dadurch gekennzeichnet,**
**dass** die Schlauchführung (400) aus zwei axial voneinander beabstandeten, austauschbaren Gehäuseeinsätzen (410), insbesondere aus Kunststoff, besteht, die gemeinsam eine unterbrochene, entlang der Schlauchführungsachse erstreckte Rundbodennut (412) bilden, wobei das Klemmglied (300) in einem Freiraum zwischen den beiden Gehäuseeinsätzen (410) angeordnet ist.

8. Quetschventil (10) nach Anspruch 7,
**dadurch gekennzeichnet,**
**dass** die Gehäuseeinsätze (410) in ihren einander zugewandten Stirnseiten jeweils eine parallel zur Stößelführungsachse erstreckte zweite Klemmglied-Führungsnut (414) aufweisen, in die jeweils ein korrespondierender Führungsvorsprung des Klemmgliedes (300) eingreift.

9. Quetschventil (10) nach einem der vorangehenden Ansprüche,
**dadurch gekennzeichnet,**
**dass** die Schwenkachsen der Klemmbacken (320) miteinander identisch sind.

10. Quetschventil (10) nach einem der vorangehenden Ansprüche,
**dadurch gekennzeichnet,**
**dass** das Widerlager Bestandteil eines öffenbaren Deckels (200) ist.

## Claims

1. Pinch valve (10), comprising:
- a hose guide (400) aligned along a hose guide axis,
- a clamping member (300) with
• a plunger (310) slidingly mounted along a plunger guide axis aligned perpendicularly to the hose guide axis, and
• two clamping jaws (320) jointly forming a clamping mouth and being articulated to the front end of the plunger (310) that faces the hose guide (400) and being configured to pivot in opposite directions about a pivot axis aligned in parallel to the hose guide axis, and
- an abutment arranged on a side of the hose guide (400) opposite the clamping member (300),
wherein the clamping member (300) is configured to advance towards the abutment to close the pinch valve (10) so that, as the clamping member (300) advances, the clamping mouth opens and the mouth base of the clamping mouth presses a hose guided in the hose guide - if present - against the abutment and thereby narrows the lumen of the hose,
and the clamping jaws (320) are coupled to a mechanical constraint such that a retraction of the plunger (310) starting from a maximally advanced clamping position of the clamping member (300) produces a pivoting movement of the clamping jaws (320) in a closing direction of the clamping mouth,
**characterized in that**
the clamping member (300) is mounted between two side walls (110) of a valve housing that extend in parallel to the hose guide axis and to the plunger guide axis,
each of the side walls having a step (112) that extends in parallel to the hose guide axis and that recedes with respect to the advancing direction of the plunger,
wherein the clamping jaws (320), upon displacement of the clamping member (300), move over said steps (112) with their outer sides that face away from the hose guide bearing against the side walls (110), wherein the mechanical constraint is achieved unidirectionally by the interaction of the outer sides of the clamping jaws (320) with the stepped side walls (110).

2. Pinch valve (10) according to claim 1,
**characterized in that**
the steps (112) are beveled at a shallow angle.

3. Pinch valve (10) according to any one of the preceding claims,
**characterized in that**
the side walls (110) each have a first clamping member guide groove (114) extending in parallel to the plunger guide axis, against the groove base of which the outer side of each associated clamping jaw (320) bears.

4. Pinch valve (10) according to any one of the preceding claims,
**characterized in that**
the clamping jaws (320) each carry, on their outer sides, a respective contact roller (326) which is configured to rotate about an axis of rotation aligned in parallel to the hose guide axis and with which the respective clamping jaw (320) bears against the associated side wall (110).

5. Pinch valve (10) according to claim 4,
**characterized in that**
the contact rollers (320) are toroidally shaped.

6. Pinch valve (10) according to any one of the preceding claims,
**characterized in that**
the plunger (310) is configured in plural parts including a plunger shaft (312) and a plunger tip (314), to which the clamping jaws (320) are articulated, wherein the plunger tip (314) is detachably connected to the plunger shaft (312), in particular via a ball latch mechanism.

7. Pinch valve (10) according to any one of the preceding claims,
**characterized in that**
the hose guide (400) comprises two axially spaced, replaceable housing inserts (410), in particular made of plastic, which together form an interrupted round bottom groove (412) extending along the hose guide axis, wherein the clamping member (300) is arranged in a free space between the two housing inserts (410).

8. Pinch valve (10) according to claim 7,
**characterized in that**
the housing inserts (410) each have, in their mutually facing respective end faces, a second clamping member guide groove (414) which extends in parallel to the plunger guide axis and in which a corresponding guide projection of the clamping member (300) engages.

9. Pinch valve (10) according to any one of the preceding claims,
**characterized in that**
the pivot axes of the clamping jaws (320) are mutually identical.

10. Pinch valve (10) according to any one of the preceding claims,
**characterized in that**
the abutment is part of an openable lid (200).

## Revendications

1. Vanne à manchon (10), comprenant
- un guidage de tuyau (400), qui est orienté le long d'un axe de guidage de tuyau,
- un élément de serrage (300) avec
• un poussoir (310), qui est monté mobile le long d'un axe de guidage de poussoir orienté perpendiculairement à l'axe de guidage de tuyau, et
• deux mâchoires de serrage (320) formant ensemble une gueule de serrage, qui sont articulées sur l'extrémité avant du poussoir (310) tournée vers le guidage de tuyau (400) et peuvent pivoter de manière opposée l'une à l'autre respectivement autour d'un axe de pivotement orienté parallèlement à l'axe de guidage de tuyau, ainsi que
- une butée, qui est disposée sur la face du guidage de tuyau (400) située à l'opposé de l'élément de serrage (300),
dans laquelle l'élément de serrage (300) peut être poussé en avant vers la butée pour fermer la vanne à manchon (10), de sorte que lors de la poussée vers l'avant de l'élément de serrage (300) la gueule de serrage s'ouvre et la base de gueule de la gueule de serrage presse un tuyau guidé dans le guidage de tuyau
- dans la mesure où il est présent - contre la butée et rétrécit ainsi la lumière du tuyau,
et les mâchoires de serrage (320) sont accouplées à un guidage forcé mécanique, de telle sorte qu'un recul du poussoir (310) partant d'une position de serrage poussée vers l'avant au maximum de l'élément de serrage (300) entraîne un mouvement de pivotement des mâchoires de serrage (320) dans la direction de fermeture de la gueule de serrage,
**caractérisée en ce**
**que** l'élément de serrage (300) est monté entre deux parois latérales (110) d'un carter de vanne s'étendant parallèlement à l'axe de tuyau ainsi qu'à l'axe de guidage de poussoir,
lesquelles présentent respectivement un étage (112) s'étendant parallèlement à l'axe de guidage de tuyau et en retrait par rapport à la direction de poussée vers l'avant de poussoir,
dans laquelle les mâchoires de serrage (320) lors d'un déplacement de l'élément de serrage (300) passent avec leurs faces extérieures opposées au guidage de tuyau de manière à s'appliquer sur les parois latérales (110) au-dessus desdits étages (112), dans laquelle le guidage forcé mécanique est obtenu de manière unidirectionnelle par interaction des faces extérieures des mâchoires de serrage (320) avec les parois latérales (110) étagées.

2. Vanne à manchon (10) selon la revendication 1, **caractérisée en ce**
**que** les étages (112) sont réalisés de manière inclinée selon un angle plat.

3. Vanne à manchon (10) selon l'une quelconque des revendications précédentes,
**caractérisée en ce**
**que** les parois latérales (110) présentent respectivement une première rainure de guidage d'élément de serrage (114) étendue parallèlement à l'axe de guidage de poussoir, sur la base de rainure de laquelle s'applique la face extérieure de la mâchoire de serrage (320) respectivement associée.

4. Vanne à manchon (10) selon l'une quelconque des revendications précédentes,
**caractérisée en ce**
**que** les mâchoires de serrage (320) portent sur leurs faces extérieures respectivement un rouleau de contact (326), qui peut tourner autour d'un axe de rotation orienté parallèlement à l'axe de guidage de tuyau et avec lequel la mâchoire de serrage (320) respective s'applique sur la paroi latérale (110) associée à celle-ci.

5. Vanne à manchon (10) selon la revendication 4, **caractérisée en ce**
**que** les rouleaux de contact (320) sont formés de manière toroïdale.

6. Vanne à manchon (10) selon l'une quelconque des revendications précédentes,
**caractérisée en ce**
**que** le poussoir (310) est réalisé en plusieurs parties avec une tige de poussoir (312) et une pointe de poussoir (314), sur laquelle les mâchoires de serrage (320) sont articulées, dans laquelle la pointe de poussoir (314) est reliée à la tige de poussoir (312) de manière détachable, en particulier par l'intermédiaire d'un mécanisme encliquetable à billes.

7. Vanne à manchon (10) selon l'une quelconque des revendications précédentes,
**caractérisée en ce**
**que** le guidage de tuyau (400) est constitué de deux inserts de boîtier (410) interchangeables, en particulier en plastique, espacés axialement l'un de l'autre, qui forment conjointement une rainure de fond ronde (412) interrompue, étendue le long de l'axe de guidage de tuyau, dans laquelle l'élément de serrage (300) est disposé dans un espace libre entre les deux inserts de boîtier (410).

8. Vanne à manchon (10) selon la revendication 7, **caractérisée en ce**
**que** les inserts de boîtier (410) présentent dans leurs faces frontales tournées l'une vers l'autre respectivement une deuxième rainure de guidage d'élément de serrage (414) étendue parallèlement à l'axe de guidage de poussoir, dans laquelle s'insère respectivement une saillie de guidage correspondante de l'élément de serrage (300).

9. Vanne à manchon (10) selon l'une quelconque des revendications précédentes,
**caractérisée en ce**
**que** les axes de pivotement des mâchoires de serrage (320) sont identiques les uns aux autres.

10. Vanne à manchon (10) selon l'une quelconque des revendications précédentes,
**caractérisée en ce**
**que** la butée fait partie d'un couvercle (200) pouvant être ouvert.
